# EUROPEAN PATENT APPLICATION

(11) **EP 4 297 162 A2**
(43) Date of publication of application: **27.12.2023**
(21) Application number: 23180593.8
(22) Date of filing: 21.06.2023
(51) Int. Cl.: H01M 50/284

(54) **BATTERY PACK**

(30) Priority: 21.06.2022 KR 20220075678
(71) Applicant: Samsung SDI Co., Ltd., Yongin-si, Gyeonggi-do 17084 (KR)
(72) Inventor: Lee, Hyeok, 17084 Yongin-si, Gyeonggi-do (KR)
(74) Representative: Gulde & Partner

(57) **Abstract**

Provided is a battery pack including a plurality of battery cells (10) and a sensing substrate (100) for collecting state information from the plurality of battery cells (10), the sensing substrate (100) including a main body (101) of the sensing substrate (100), branch portions (B) connected to the main body (101) of the sensing substrate (100) by bypassing the sensing substrate (100) such that first deformation accommodating spaces (G1) are positioned between the main body (101) and the branch portions (B), and ring units (R) connected to the branch portions (B) and forming second deformation accommodating spaces (G2).

Therefore, provided is a battery pack including a sensing substrate (100) providing deformation accommodating spaces (G1, G2) so that a part of the sensing substrate (100) for acquiring state information of battery cells (10) is flexibly deformed, in which the positional movement of bus bars (151, 152) accompanying volume expansion such as swelling of the battery cells (10) caused during charging and discharging of the battery cells (10) is flexibly followed and the accumulated internal stress and the resulting damage due to the positional movement of the bus bars (151, 152) are prevented.

## Description

### BACKGROUND

### 1. Field

One or more embodiments relate to a battery pack.

### 2. Description of the Related Art

Typically, secondary batteries are capable of charging and discharging, unlike primary batteries which are not capable of charging. Secondary batteries may be used as energy sources for mobile devices, electric vehicles, hybrid vehicles, electric bicycles, uninterruptible power supplies, etc., and may be used in the form of a single battery or in the form of a module in which multiple batteries are connected and bundled into a single unit, depending on the type of external devices applied thereto.

While small mobile devices such as cell phones can operate for a certain period of time with the output and capacity of a single battery, a battery in the form of a module including a plurality of batteries may be used for a case requiring long-term driving and high power driving as in electric cars and hybrid cars with high power consumption, and for the output voltage or output current may be increased depending on the number of built-in batteries,

### SUMMARY

One or more embodiments include a battery pack including a sensing substrate providing deformation accommodating spaces such that a part of the sensing substrate for acquiring state information of battery cells may be flexibly deformed, in which the positional movement of bus bars accompanying volume expansion such as swelling of the battery cells caused during charging and discharging of the battery cells may be flexibly followed and the accumulated internal stress due to the positional movement of the bus bars and the resulting damage may be prevented.

Additional aspects will be set forth in part in the description which follows and, in part, will be apparent from the description.

According to one or more embodiments, a battery pack includes a plurality of battery cells, and a sensing substrate for collecting state information from the plurality of battery cells, the sensing substrate including a main body of the sensing substrate, branch portions connected to the main body of the sensing substrate by bypassing the sensing substrate such that first deformation accommodating spaces are positioned between the main body and the branch portions, and ring units connected to the branch portions and forming second deformation accommodating spaces.

For example, the branch portions may surround the first deformation accommodating spaces together with the main body of the sensing substrate.

The ring units may completely surround the second deformation accommodating spaces.

For example, the first and second deformation accommodating spaces may be formed to be closed from the outside.

For example, the first deformation accommodating spaces may extend in a first direction between the branch portions and the main body of the sensing substrate extending in parallel in the first direction.

For example, the first deformation accommodating spaces may be closed by first support units connected to the main body of the sensing substrate at both ends in the first direction.

For example, the first support units may have a round shape and may connect the branch portions and the main body of the sensing substrate extending in parallel in the first direction.

For example, each of the ring units may extend in the form of a circular closed loop and may surround each of the circular second deformation accommodating spaces.

For example, the ring units may be connected to the main body of the sensing substrate and the branch portions may extend to both sides of each of the ring units by three second support units formed along the periphery of the ring unit.

For example, a second support unit, among the second support units, connecting the ring unit and the main body of the sensing substrate may divide the first deformation accommodating space formed between the main body of the sensing substrate and the branch portions where the ring unit is formed into two.

For example, connection positions connected to the battery cells may be formed on the branch portions.

For example, the connection positions may include first and second connection positions located at both sides of each of the ring units as the center.

For example, the first and second connection positions may be arranged in the first direction in which the plurality of battery cells are arranged.

For example, the first and second connection positions may be connected to first and second bus bars located adjacent to each other in the first direction, or first and second connection units located adjacent to each other in the first direction for connection with the first and second bus bars.

For example, the first and second connection positions may be connected to the first and second connection units connected to the first and second bus bars.

For example, each of the first and second bus bars may connect different battery cells.

For example, the ring unit may be connected, by the second support units formed on both sides of the ring unit, to the branch portion where the first connection position is formed and to the branch portion where the second connection position is formed.

For example, the first support unit at one end that closes the first deformation accommodating space may be formed on the opposite side of the ring unit with the first connection position as the center.

For example, the first support unit at the other end that closes the first deformation accommodating space may be formed on the opposite side of the ring unit with the second connection position as the center.

For example, with the ring unit as the center, the first and second connection positions may be formed at an inner position adjacent to the ring unit, and the first support unit at one end and the first support unit at the other end may be formed at an outer position relatively distant from the ring unit.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The above and other aspects, features, and advantages of certain embodiments of the present invention will be more apparent from the following description taken in conjunction with the accompanying drawings, in which:
FIG. 1 is an exploded perspective view of a battery pack according to an embodiment;
FIG. 2 is an exploded perspective view of a part of the battery pack shown in FIG. 1;
FIG. 3 is a plan view showing a sensing structure for collecting state information of battery cells, including a sensing substrate and connection units connected to the sensing substrate, as a part of the battery pack shown in FIG. 1; and
FIG. 4 is a plan view showing first and second pin members fitted into the first and second deformation accommodating spaces for temporarily fixing the sensing substrate, as a part of the battery pack shown in FIG. 3.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, a battery pack according to a preferred embodiment will be described with reference to the accompanying drawings.

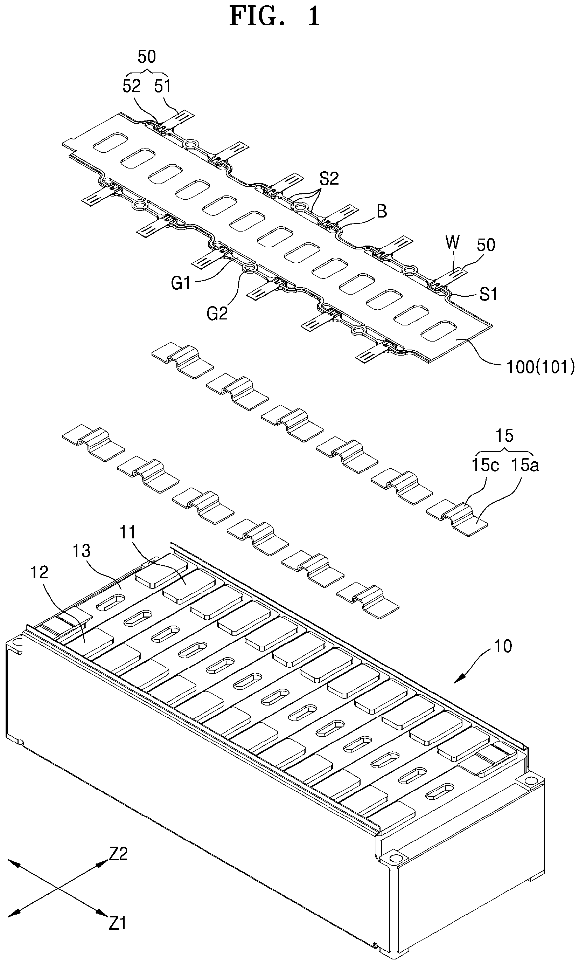

FIG. 1 is an exploded perspective view of a battery pack according to an embodiment.

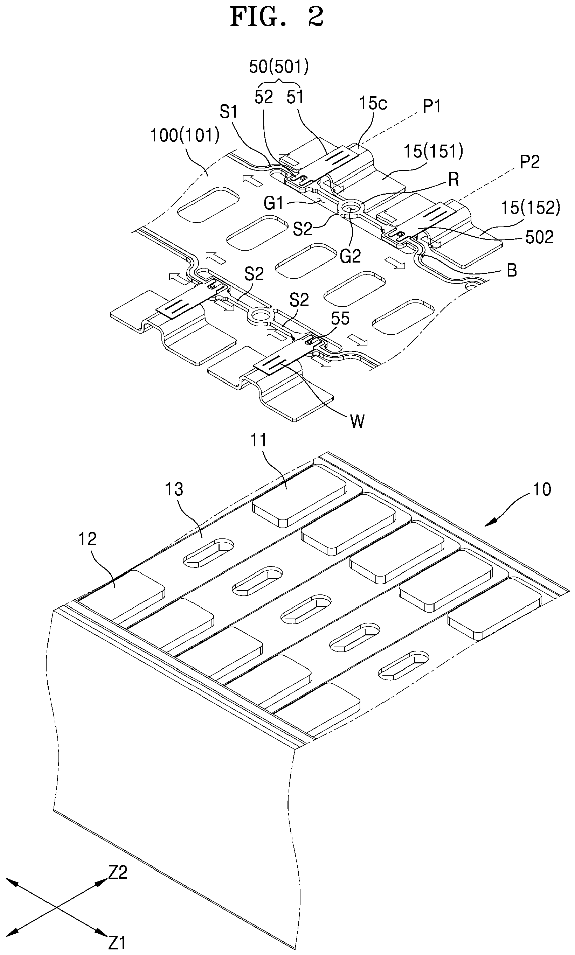

FIG. 2 is an exploded perspective view of a part of the battery pack shown in FIG. 1.

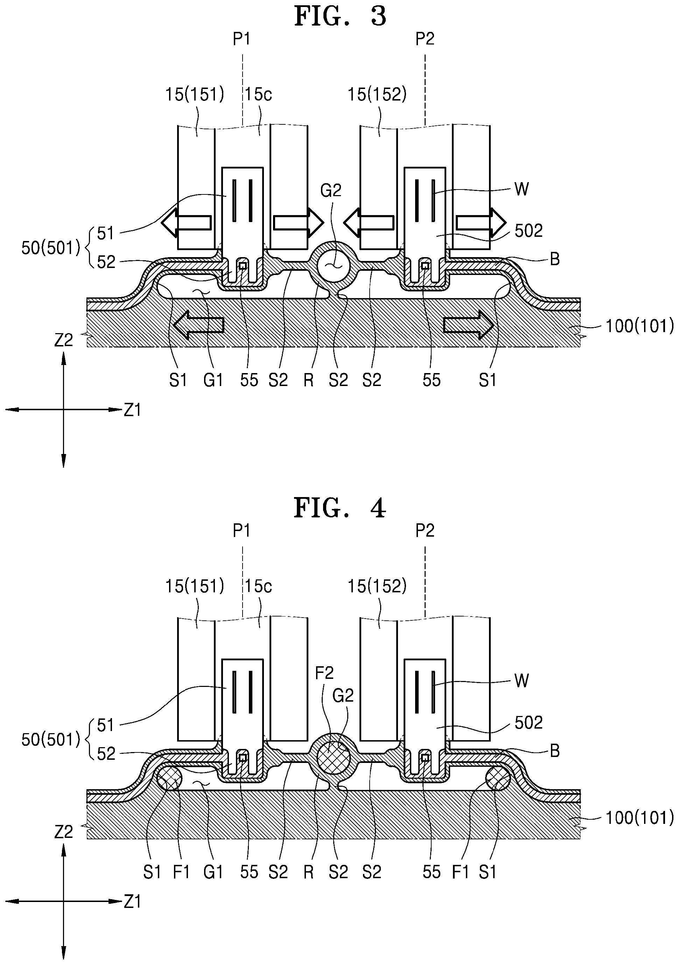

FIG. 3 is a plan view showing a sensing structure for collecting state information of battery cells, including a sensing substrate and connection units connected to the sensing substrate, as a part of the battery pack shown in FIG. 1.

FIG. 4 is a plan view showing first and second pin members inserted into the first and second deformation accommodating spaces for temporarily fixing the sensing substrate, as a part of the battery pack shown in FIG. 3.

Referring to FIGS. 1 to 4, a battery pack according to an embodiment may include a plurality of battery cells 10 and a sensing substrate 100 for collecting state information from the plurality of battery cells 10. The sensing substrate 100 may include a main body 101 of the sensing substrate 100, branch portions B connected to the main body 101 of the sensing substrate 100 by bypassing the sensing substrate 100 such that first deformation accommodating spaces G1 are positioned between the main body 101 and the branch portions B, and ring units R connected to the branch portions B and forming second deformation accommodating spaces G2.

In an embodiment, the sensing substrate 100 may extend across terminal surfaces 13 of the plurality of battery cells 10 arranged in a first direction Z1, and first and second electrode terminals 11 and 12 having different polarities may be formed on the terminal surfaces 13 of the battery cells 10 in a second direction Z2 crossing the first direction Z1, wherein the first and second electrode terminals 11 and 12 may form first and second rows of electrode terminals 11 and 12 on both sides of the second direction Z2 along the plurality of battery cells 10 arranged in the first direction Z1. Bus bars 15 electrically connecting the different battery cells 10 by connecting the first and second electrode terminals 11 and 12 of the different battery cells 10 may also form first and second rows of bus bars 15 on both sides in the second direction Z2 along the battery cells 10 arranged in the first direction Z1 for electrical connection with the first and second rows of electrode terminals 11 and 12.

Referring to FIG. 1, in an embodiment, the bus bar 15 may include connection pieces 15a formed at both ends of the bus bar 15 and connected to the electrode terminals 11 and 12 of different battery cells 10 and a link piece 15c formed at the center of the bus bar 15 to connect the connection pieces 15a on both sides connected to the electrode terminals 11 and 12 of the different battery cells 10, wherein the link piece 15c bent from the connection pieces 15a formed at both ends of the bus bar 15 may elastically deformably connect the connection pieces15a formed at both ends of the bus bar 15. As described below, in an embodiment, a first connection region 51 of the connection unit 50 may be connected to the link piece 15c of the bus bar 15.

According to an embodiment, the main body 101 of the sensing substrate 100 may refer to a main part of the sensing substrate 100, among components of the sensing substrate 100, except for the branch portions B branched outward from the main body 101 of the sensing substrate 100 to approach from the main body 101 of the sensing substrate 100 toward the first and second rows of bus bars 15 with the deformation accommodating spaces G1 positioned between the main body 101 and the branch portions B, and may account for most of the area of the sensing substrate 100. For example, in an embodiment, the sensing substrate 100 may include the main body 101 of the sensing substrate 100 extending at a relatively inner position in the second direction Z2 across the terminal surfaces 13 of the plurality of battery cells 10 arranged in the first direction Z1, and the branch portions B located at a relatively outer position in the second direction Z2 with the first deformation accommodating space G1 positioned between the main body 101 and the branch portions B to approach from the main body 101 of the sensing substrate 100 toward the first and second rows of bus bars 15. The branch portions B may be positioned at a relatively outer position, spaced apart from the main body 101 of the sensing substrate 100 with the first deformation accommodating space G1 between the main body 101 and the branch portions B, to approach from the main body 101 of the sensing substrate 100 toward the first and second rows of bus bars 15. Through the description, the inner position may refer to a direction in which the first and second electrode terminals 11 and 12 having different polarities positioned in the second direction Z2 face each other or a relative position along the direction in which the first and second electrode terminals 11 and 12 of different polarities positioned in the second direction Z2 face each other, and the outer position may refer to a direction in which the first and second electrode terminals 11 and 12 of different polarities positioned in the second direction Z2 face away from each other or a relative position along the direction in which the first and second electrode terminals 11 and 12 of different polarities positioned in the second direction Z2 face away from each other

In an embodiment, the state information of the battery cells 10 may include temperature, voltage, and current of the battery cells 10, and the state information collected from the battery cells 10 may be transferred through the sensing substrate 100 to a battery management unit (not shown) connected to an end of the sensing substrate 100. In an embodiment, through the bus bars 15 forming a thermal and electrical connection with the first and second electrode terminals 11 and 12 of the battery cells 10, for example, the state information of the battery cells 10 may be obtained through the connection units 50 connected to the bus bars 15. For example, temperature information of the battery cells 10 may be obtained through the bus bars 15 thermally connected to the first and second electrode terminals 11 and 12 of the battery cells 10 and voltage information of the battery cells 10 may be obtained through the bus bars 15 electrically connected to the first and second electrode terminals 11 and 12 of the battery cells 10. In an embodiment, electrical signals related to the state information of the battery cells 10 including temperature information and/or voltage information of the battery cells 10 may be generated through the connection units 50 connected to the bus bars 15 and the generated electrical signals may be transferred to the sensing substrate 100. In an embodiment, the sensing substrate 100 may be connected to the bus bars 15 connected onto the terminal surfaces 13 of the battery cells 10 in order to collect state information of the battery cells 10. In some embodiments, the sensing substrate 100 may be directly connected onto the terminal surfaces 13 of the battery cells. That is, in some embodiments, that the sensing substrate 100 is connected to the battery cells 100 to collect state information of the battery cells may inclusively mean that the sensing substrate 100 is directly connected to the battery cells 100, e.g., the terminal surfaces 13 of the battery cells 100, or the sensing substrate 100 is connected to the bus bars 15 connected to the battery cells 10.

In an embodiment, the sensing substrate 100 may include the main body 101 of the sensing substrate 100 and the branch portions B connected to the battery cells 10 (e.g., bus bars 15), respectively, from the main body 101 of the sensing substrate 100. The sensing substrate 100 including the main body 101 of the sensing substrate 100 and the branch portions B of the sensing substrate 100 may be positioned between the first and second rows of bus bars 15 in whole, e.g., positioned at an inner position between the first and second rows of bus bars 15 in the second direction Z2 crossing the first direction Z1.

In an embodiment, the connection units 50 mediating the connection between the bus bars 15 and the sensing substrate 100 may be positioned between the bus bars 15 and the sensing substrate 100, and the connection units 50 may mediate transfer of state information of the battery cells 10 between the bus bars 15 and the sensing substrate 100. In an embodiment, the connection units 50 may not only transfer state information of the battery cells 10 but also generate electrical signals related to the state information of the battery cells 10 and transfer the generated state information of the battery cells to the sensing substrate 100.

In an embodiment, the connection unit 50 including a first connection region 51 thermally and/or electrically connected to the bus bar 15 and a second connection region 52 electrically connected to the sensing substrate 100 may mediate the transfer of state information of the battery cells 10 between the bus bar 15 and the sensing substrate 100 and may include a sensing device 55 for generating state information of the battery cells 10 transferred through the first connection region 51 as electrical signals, the state information including temperature or voltage of the battery cells 10. However, in an embodiment, the sensing device 55 may be formed at the second connection region 52 connected to the sensing substrate 100, among the first connection region 51 connected to the bus bar 15 and the second connection region 52 connected to the sensing substrate 100.

In some embodiments, the first connection region 51 may transfer temperature information of the bus bar 15 to the sensing device 55 of the second connection region 52 while forming a thermal connection with the bus bar 15, and may transfer voltage information of the bus bar 15 to the sensing device 55 of the second connection region 52 while forming an electrical connection with the bus bar 15. In addition, the state information of the battery cells 10 generated from the sensing device 55 through the second connection region 52 may be transferred to the main body 101 of the sensing substrate 100.

In an embodiment, the first connection region 51 may include a metal terminal, and specifically, the first connection region 51 may include a metal terminal including a nickel plate having excellent thermal and electrical conduction properties. The first connection region 51 may be connected to the bus bar 15 through a welding joint unit W. In an embodiment, the first connection region 51 may be connected to the bus bar 15 through laser welding.

In an embodiment, the second connection region 52 may be provided as a one-sided circuit board or a double-sided circuit board. In an embodiment, one side of the connection region 52 provided as a double-sided circuit board may be connected to the sensing device 55 and the other side thereof may be connected to the sensing substrate 100, where the second connection region 52 may be electrically connected to the sensing device 55 and the sensing substrate 100 through soldering. In an embodiment, the second connection region 52 as a location of the connection unit 50 mediating the connection with the sensing substrate 100 may refer to a region formed at the connection unit 50, and as described below, may correspond to the connection position P1 and P2 formed at the sensing substrate 100. In an embodiment, a connection between the connection unit 50 and the sensing substrate 100 may be made through a connection between the second connection region 52 of the sensing unit 50 and the connection position P1 and P2 of the sensing substrate 100, and thus the second connection region 52 of the connection unit 50 between the connection unit 50 and the sensing substrate 100 may be understood as the same as the connection position P1 and P2 of the sensing substrate 100. More specifically, the second connection region 52 may refer to one component of the connection unit 50, and the connection position P1 and P2 may refer to one component of the sensing substrate 100. As described below, in an embodiment, the connection unit 50 may include first and second connection units 501 and 502 connected to first and second bus bars 151 and 152 adjacent to each other in the first direction Z1, and similarly, the connection position P1 and P2 may include first and second connection positions P1 and P2 connected to the first and second bus bars 151 and 152 adjacent to each other in the first direction Z1, where the first and second connection units 50 (more specifically, the second connection regions 52 of the first and second connection units 501 and 502) adjacent to each other in the first direction Z1 and the first and second connection positions P1 and P2 may be formed at substantially the same position on a plane formed by the first and second directions Z1 and Z2 while being connected to each other at positions corresponding to each other.

Hereinafter, the configuration of the sensing substrate 100 for collecting state information of the battery cells 10 will be described in more detail. The sensing substrate 100 may include the main body 101 of the sensing substrate 100 and the branch portions B connected thereto by bypassing the main body 101 of the sensing substrate 100 so as to approach the bus bars 15 with the first deformation accommodating spaces G1 between the main body 101 of the sensing substrate and the branch portions B. The branch portions B may extend in parallel in the first direction Z1 together with the main body 101 of the sensing substrate 100, and may be offset from the main body 101 of the sensing substrate 100 toward the bus bars 15 in the second direction Z2 crossing the first direction Z1 in which the plurality of battery cells 10 are arranged. The branch portions B may be elongated substantially in the first direction Z1, and first support units S1 connected to the main body 101 of the sensing substrate 100 may be formed at both ends of the branch portion B extending in the first direction Z1. In an embodiment, the branch portion B may provide the connection positions P1 and P2 with the connection units 50 between the first support units S1 at both ends, and the ring unit R in the form of a closed loop surrounding the second deformation accommodating space G2 together with the connection positions P1 and P2 with the connection units 50 may be formed on the branch portions B such that the branch portions B providing the connection positions P1 and P2 with the connection units 50 flexibly follow the displacement of the bus bars 15 or the connection units 50 connected to the bus bars 15 accompanying swelling of the battery cells 10.

In an embodiment, the connection positions P1 and P2 of the connection units 50 may refer to positions where the connection units 50 connecting the battery cells 10 and the sensing substrate 100 are connected to the sensing substrate 100, and in an embodiment, the connection positions P1 and P2 of the connection units 50 may include the first and second connection positions P1 and P2 connected to the different first and second connection units 501 and 502 in the first direction Z1. For example, in an embodiment, the first and second connection positions P1 and P2 connected to the adjacent first and second bus bars 151 and 152 via the first and second connection units 501 and 502 may refer to positions where the first and second connection units 501 and 502 adjacent to each other in the first direction Z1 are connected to the sensing substrate 100, and may also refer to positions where the first and second bus bars 151 and 152 adjacent to each other in the first direction Z1 are connected to the sensing substrate 100 via the first and second connection units 501 and 502. In this sense, the first and second connection positions P1 and P2 may refer to positions where the first and second connection units 501 and 502 adjacent to each other in the first direction Z1 are connected or where the first and second bus bars 151 and 152 adjacent to each other in the first direction Z1 are connected. As described below, the ring unit R surrounding the second deformation accommodating space G2 may be positioned between the first and second connection positions P1 and P2 arranged adjacent each other in the first direction Z1 to allow relative deformation or displacement between the first and second connection positions P1 and P2.

The first deformation accommodating space G1 may be formed between the main body 101 of the sensing substrate 100 and the branch portions B in the second direction Z2 crossing the first direction Z1, and the second deformation accommodating space G2 may be formed between the adjacent first and second connection positions P1 and P2 on the branch portions B extending in the first direction Z1. In an embodiment, both the first and second deformation accommodating spaces G1 and G2 may be surrounded by the sensing substrate 100 and may be formed by components of the sensing substrate 100 surrounding the first and second first and second deformation accommodating spaces G1 and G2. For example, the first deformation accommodating space G1 may be surrounded by the branch portions B of the sensing substrate 100, and more specifically, by the branch portions B and the main body 101 of the sensing substrate 100, and the second deformation accommodating space G2 may be surrounded by the ring unit R of the sensing substrate 100. In an embodiment, the first and second deformation accommodating spaces G1 and G2 may be formed to be closed from the outside, e.g., surrounded by the branch portions B and the main body 101 of the sensing substrate 100, and the second deformation accommodating space G2 may be formed to be closed from the outside surrounded by the ring unit R. For example, the branch portions B may surround the first deformation accommodating space G1 partially when it is assumed that the branch portions B surround the first deformation accommodating space G1, while the ring unit R may surround the second deformation accommodating space G2 completely or entirely when it is assumed that the ring unit R surrounds the second deformation accommodating space G2.

In an embodiment, the first and second deformation accommodating spaces G1 and G2 adjacent to the connection positions P1 and P2 are formed through the shape design of the branch portions B and the ring unit R connected to the connection positions P1 and P2 so that the relative displacement of the connection positions P1 and P2 connected to the bus bars 15 or the connection units 50 may be allowed to comply with the displacement of the bus bars 15 accompanying the swelling of the battery cells 10 or the displacement of the connection units 50 connected to the bus bars 15. The first and second deformation accommodating spaces G1 and G2 accommodating the deformation of the branch portions B and the ring unit R may allow the branch portions B and the ring unit R to be flexibly deformed by following the displacement of the connecting positions P1 and P2. For example, the deformation of the branch portions B and the ring unit R, such as dents of the branch portions B and the ring unit R, may be induced by accommodating the deformation through the first and second deformation accommodating spaces, and the flexible deformation or displacement of the connection positions P1 and P2 may be allowed through the first and second deformation accommodating spaces G1 and G2.

In an embodiment, since the first and second deformation accommodating spaces G1 and G2 are surrounded by the sensing substrate 100 and formed to be closed from the outside, the deformation of the sensing substrate 100 causing the sensing substrate 100 to be warped or fluttered or lifted from the plane on which the sensing substrate 100 is arranged may be prevented and co-planarity of the sensing substrate 100 may be maintained. Contrary to the disclosure, when the first and second deformation accommodating spaces G1 and G2 are formed to be open to the outside, a part (e.g., the branch portions B forming the first deformation accommodating space G1 or the ring unit R forming the second deformation accommodating space, particularly, ends that open the first and second deformation accommodating spaces G1 and G2 among the branch portions B and the ring unit R) of the sensing substrate 100 surrounding the first and second deformation accommodating spaces G1 and G2 may not maintain the co-planarity on the plane on which the sensing substrate 100 is arranged, and the connection positions P1 and P2 may become excessively flexible due to deformation such as twisting, fluttering, lifting, etc., thereby deteriorating connectivity with the connection units 50 at the connection positions P1 and P2.

In an embodiment, the first deformation accommodating space G1 may be elongated in the first direction Z1 in which the plurality of battery cells 10 are arranged, and may be elongated in the first direction Z1 between the branch portions B extending substantially in parallel in the first direction Z1 and the main body 101 of the sensing substrate 100. For example, as the first deformation accommodating space G1 is distorted in the first direction Z1 in which the plurality of battery cells 10 are arranged, or in the first direction Z1 in which the swelling of the plurality of battery cells 10 is accumulated, the branch portions B forming the first deformation accommodating space G1 and the connection positions P1 and P2 connected to the branch portions B may be deformed or displaced in the first direction Z1. In an embodiment, the first deformation accommodating space G1 may be elongated in the first direction Z1 between the branch portions B and the main body 101 of the sensing substrate 100, and positions of both ends of the first deformation accommodating space G1 may be closed by the first support units S1 connecting the branch portions B and the main body 101 of the sensing substrate 100.

In some embodiments, the first deformation accommodating space G1 may include one space formed between the branch portions B and the main body 101 of the sensing substrate 100, or a plurality of spaces formed by dividing the space into two or more between the branch portions B and the main body 101 of the sensing substrate 100. As described below, in an embodiment, the first deformation accommodating space G1 may be divided into two by a second support unit S2 extending from the ring unit R connected to the branch portions B to the main body 101 of the sensing substrate 100.

In an embodiment, the second deformation accommodating space G2 may be formed in a closed loop shape surrounded by the ring unit R connected to the branch portions B and may be formed in a circular closed loop shape according to the shape of the ring unit R. In an embodiment, as the ring unit R is formed in the circular closed loop shape, e.g., the ring unit R may be flexibly deformed in response to thermal stress acting in various directions including first and second directions Z1 and Z2 according to thermal expansion of the battery cells 10, and may not have a specific orientation. However, in some embodiments, the ring unit R may be formed in various polygonal shapes including ovals and quadrangles in addition to the circular shape, and may have anisotropy showing different behaviors depending on the direction of thermal stress.

For example, as the second deformation accommodating space G2 is distorted in the first direction Z1 in which the plurality of battery cells 10 are arranged, or in the first direction Z1 in which the swelling of the plurality of battery cells 10 is accumulated, the ring unit R forming the second deformation accommodating space G2 and the connection positions P1 and P2 connected to the ring unit R may be deformed or displaced in the first direction Z1. In an embodiment, the ring unit R or the second deformation accommodating space G2 formed by the ring unit R may be formed between the different first and second connection positions P1 and P2 in the first direction Z1, and may elastically connect the first and second connection positions P1 and P2 while allowing relative displacement between the first and second connection positions P1 and P2. The first and second bus bars 151 and 152 (the adjacent first and second connection units 501 and 502 connected to the first and second bus bars 151 and 152 adjacent to each other in the first direction Z1) adjacent to each other in the first direction Z1 may be connected to the first and second connection positions P1 and P2, respectively, and the ring unit R or the second deformation accommodating space G2 formed by the ring unit R may flexibly connect the first and second connection positions P1 and P2 to which the first and second bus bars 151 and 152 adjacent to each other in the first direction Z1 are connected. The first and second connection positions P1 and P2 may be formed at different locations of the branch portions B extending in the first direction Z1, and include the first connection position P1 formed between the ring unit R and the first support unit S1 formed at one end of the branch portions B and the second connection position P2 formed between the ring unit R and the first support unit formed at the other end of the branch portions B.

In an embodiment, the ring unit R forming the second deformation accommodating space G2 may support other components of the sensing substrate 100 through the two or more second support units S2 formed around the ring unit R. For example, in an embodiment, the ring unit R may be connected to the branch portions B through the second support units S2 on both ends in the first direction Z1, and may be connected to the branch portions B in which the first and second connection positions P1 and P2 are respectively formed. In an embodiment, the ring unit R may be supported by the branch portions B of the sensing substrate 100 extending to both sides of the ring unit R in the first direction Z1 and the main body 101 of the sensing substrate 100 through the three second support units S2 formed around the ring unit R. That is, more specifically, the ring unit R may be connected to both sides of the branch portions B through the second support units S1 and may be connected to the main body 101 of the sensing substrate 100 through the other second support unit S2. In addition, the second support unit S1 connecting the ring unit R and the main body 101 of the sensing substrate 100 may divide the first deformation accommodating space G1 formed between the branch portions B in which the ring unit is formed and the main body 101 of the sensing substrate 100 into two, wherein two first deformation accommodating spaces G1 may be formed by dividing the first deformation accommodating space G1 by the second support unit S2 between the branch portions B and the main body 101 of the sensing substrate 100.

In an embodiment, the sensing substrate 100 may include the main body 101 of the sensing substrate 100 and the branch portions B spaced from the main body 101 of the sensing substrate 100 to an outer position from the main body 101 of the sensing substrate 100 so as to provide the first deformation accommodating space G1. Through the description, the branch portions B may refer to a portion spaced apart from the main body 101 of the sensing substrate 100 so as to provide therebetween the first deformation accommodating space G1 in whole or in part. In this sense, it may be understood that the first support units S1 connect the branch portions B forming the first deformation accommodating space G1 to the main body 101 of the sensing substrate 100, and it may also be understood that the branch portions B may include the first support units S1. As such, through the description, the branch portions B may refer to a portion spaced apart from the main body 101 of the sensing substrate 100 so as to provide therebetween the first deformation accommodating space G1 in whole or in part. In this sense, it may be understood that the second support units S2 may connect the ring unit R to the branch portions B and it may also be understood that the branch portions B include the second support units S2. In an embodiment, the branch portions B including first support units S1 formed at both ends of the first deformation accommodating space G1 in the first direction Z1 and a pair of the second support units S2 formed at both ends of the ring unit R surrounding the second deformation accommodating space G2 in the first direction Z1 may collectively refer to a portion which is spaced apart from the main body 101 of the sensing substrate 100 by providing the first deformation accommodating space G1 from the main body 101 of the sensing substrate 100 in whole.

In an embodiment, the first and second deformation accommodating spaces G1 and G2 may be formed to be closed from the outside, e.g., surrounded by a part of the sensing substrate 100 completely, thereby fixing the connection positions P1 and P2 with the connection units 50 so as not to move arbitrarily. For example, the connection between the bus bars 15 and the sensing substrate 100 using the connecting units 50 may be easily made while maintaining the co-planarity of the sensing substrate 100 in whole.

In an embodiment, in the battery pack to which the connection of the bus bars 15 is completed, the first and second deformation accommodating spaces G1 and G2 may allow flexible deformation or displacement to conform to the swelling of the battery cells 10 by allowing deformation or displacement of the connection positions P1 and P2 connected to the bus bars 15 or the connection units 50, and relieve the internal stress accumulated in the sensing substrate 100, thereby contributing to the purpose of preventing damage to the sensing substrate 100 due to the accumulated internal stress. However, in the battery pack before the connection with the bus bars 15 is completed, the sensing substrate 100 may be temporarily fixed through the first and second deformation accommodating spaces G1 and G2 considering the connectivity with the bus bars 15 and for the purpose of improving distribution or handling convenience of the sensing substrate 100. Through the description, temporarily fixing the sensing substrate 100 may refer to, for example, fixing at least a part of the sensing substrate 100 such as the branch portions B and the ring unit R using pin members F1 and F2 fitted into the branch portions B and the ring unit R, as a part of the sensing substrate 100, rather than completely fixing the sensing substrate 100 in position.

Hereinafter, a structure for temporarily fixing the sensing substrate 100 through the first and second deformation accommodating spaces G1 and G2 will be described in more detail. For example, by temporarily fixing the sensing substrate 100 through the first and second deformation accommodating spaces G1 and G2, the connectivity of the bus bars 15 may be improved. More specifically, the first and second deformation accommodating spaces G1 and G2 may serve the purpose of preventing movement of the connection positions P1 and P2 with the connection units 50 and enabling stable connection with the bus bars 15. For example, the pin members F1 and F2 for temporarily fixing the branch portions B and the ring unit R may be fitted into at least a part of the first and second deformation accommodating spaces G1 and G2. For example, in an embodiment, the pin members F1 and F2 may be fitted into both ends of the first deformation accommodating space G1 and the second deformation accommodating space G2 as a part of the first and second deformation accommodating spaces G1 and G2.

In an embodiment, for connection with the bus bars 15 and/or convenience in distribution and handling of the sensing substrate 100, the pin members F1 and F2 may be fitted into at least a part of the first and second deformation accommodating spaces G1 and G2, and the first pin members F1 may be fitted into both ends of the first deformation accommodating space G1, more specifically, to the first support units S1, respectively, formed at both ends of the first deformation accommodating space G1. Considering the connection with the first pin members F1, e.g., considering the contact area with the first pin members F1 of a circular cross section, the first support units S1 may be formed in a rounded shape. In other words, the first support units S1 in a rounded shape may connect the branch portions B with the main body 101 of the sensing substrate 100 extending in parallel in the first direction Z1. The second pin member F2 may be fitted into the second deformation accommodating space G2, and considering the contact area with the second pin member F2 of a circular cross section, the second deformation accommodating space G2 may be formed in a circular closed loop shape.

In an embodiment, even though the first and second pin members F1 and F2 are fitted into the first and second deformation accommodating spaces G1 and G2, the purpose of the first and second pin members F1 and F2 is to stably maintain the connection positions P1 and P2 connected to the branch portions B and the ring unit R by temporarily fixing the branch portions B and the ring unit R forming the first and second deformation accommodating spaces G1 and G2, thereby improving distribution or handling convenience of the sensing substrate 100 or the connectivity with the bus bars 15. In the battery pack to which the connection of the bus bars 15 is completed, the first and second pin members F1 and F2 may be removed from the first and second deformation accommodating spaces G1 and G2 so that the first and second deformation accommodating spaces G1 and G2 accommodate deformation of the branch portions B and the ring unit R surrounding the first and second deformation accommodating spaces G1 and G2. In a state in which restraints of the first and second pin members F1 and F2 are excluded, the first and second deformation accommodating spaces G1 and G2 may sufficiently accommodate the deformation of the branch portions B and the ring unit R surrounding the first and second deformation accommodating spaces G1 and G2, and the connection positions P1 and P2 connected to the branch portions B and the ring unit R may be elastically deformed or displaced by following the swelling of the battery cells 10.

In an embodiment, a sensing structure that mediates transfer of state information between the battery cells 10 and the sensing substrate 100 may be formed in a symmetrical shape, e.g., a symmetrical shape with the ring unit R or the second deformation accommodating space G2 formed by the ring unit R as the centers. More specifically, the first and second deformation accommodating spaces G1 and G2, and the branch and ring units B and R surrounding the first and second deformation accommodating spaces G1, G2 that form the sensing structure may be formed in a symmetrical shape. For example, the first and second connection positions P1 and P2 may be formed on both sides in the first direction Z1 with the ring unit R as the center, and the first support unit S1 at one end and the first support unit S1 at the other end connecting the branch portions B and the main body 101 of the sensing substrate 100 may be formed on the opposite sides of the ring unit R with the first connection position P1 and the second connection position P2 as the centers, respectively. As such, in an embodiment, as the sensing structure for mediating the transfer of state information between the battery cells 10 and the sensing substrate 100 is formed in a symmetrical shape, the connecting positions P1 and P2 or the sensing substrate 100 may be stably and temporarily fixed by fitting the first and second pin members F1 and F2 to the first and second deformation accommodating spaces G1 and G2, for the purpose of temporarily fixing the connection positions P1 and P2 or temporarily fixing the sensing substrate 100. For example, the connection positions P1 and P2 or the sensing substrate 100 may be stably and temporarily fixed at symmetrical positions with respect to each other.

In an embodiment, the symmetrical shape of the sensing structure mediating the transfer of state information between the battery cells 10 and the sensing substrate 100 will be described in more detail below. That is, around the ring unit R, the first and second connection positions P1 and P2 may be formed at an inner position adjacent to the ring unit R, and the first support unit S1 at one end and the first support unit S1 at the other end may be formed at an outer position relatively far from the ring unit R. The first and second connecting positions P1 and P2 formed at an inner position around the ring unit R in the first direction Z1 may be formed in positions and shapes symmetrical to each other, and the first support unit S1 at one end and the first support unit S1 at the other end formed at an outer position in the first direction Z1 around the ring unit R may be formed in positions and shapes symmetrical to each other.

Through the description, the connection positions P1 and P2 may refer to positions where the bus bars 15 or the connection units 50 connected to the bus bars 15 are connected to the sensing substrate 100. For example, the connection positions P1 and P2 may have appropriate areas and structures on which the second connection regions 52 of the connection units 50 are mounted so as to form an electrical connection with the second connection regions 52 of the connection units 50, e.g., the connection units 50 provided with a double-sided circuit board or a single-sided circuit board. The connection positions P1 and P2 may provide a stable support base for the second connection regions 52 of the connection units 50 as the connection positions P1 and P2 have a wider width (in the second direction Z2) than the branch portions B, and the connection positions P1 and P2 may include conductive patterns (not shown) that may be electrically connected to the second connection regions 52 of the connection units 50.

According to the present invention, a battery pack including a sensing substrate providing deformation accommodating spaces so that a part of the sensing substrate for acquiring state information of battery cells may be flexibly deformed, in which the positional movement of bus bars accompanying volume expansion such as swelling of the battery cells caused during charging and discharging of the battery cells may be flexibly followed and the accumulated internal stress and the resulting damage due to the positional movement of the bus bars may be prevented.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present invention as defined by the appended claims.

## Claims

1. A battery pack comprising: a plurality of battery cells (10); and
a sensing substrate (100) for collecting state information from the plurality of battery cells (10), the sensing substrate (100) including: a main body (101) of the sensing substrate (100), branch portions (B) connected to the main body (101) of the sensing substrate (100) by bypassing the sensing substrate (100) such that first deformation accommodating spaces (G1) are positioned between the main body (101) and the branch portions (B), and ring units (R) connected to the branch portions (B) and forming second deformation accommodating spaces (G2).

2. The battery pack of claim 1,
wherein the branch portions (B) surround the first deformation accommodating spaces (G1) together with the main body (101) of the sensing substrate (100), and
the ring units (R) completely surround the second deformation accommodating spaces (G2); and/or
wherein the first and second deformation accommodating spaces (G1, G2) are formed to be closed from the outside; and/or
wherein the first deformation accommodating spaces (G1) extend in a first direction (Z1) between the branch portions (B) and the main body (101) of the sensing substrate (100) extending in parallel in the first direction.

3. The battery pack of claim 1 or 2,
wherein the first deformation accommodating spaces (G1) are closed by first support units (S1) connected to the main body (101) of the sensing substrate (100) at both ends in the first direction (Z1).

4. The battery pack of claim 3,
wherein the first support units (S1) having a rounded shape connect the branch portions (B) and the main body (101) of the sensing substrate (100) extending in parallel in the first direction (Z1).

5. The battery pack of any one of the preceding claims,
wherein each of the ring units extends in the form of a circular closed loop and surrounds each of the circular second deformation accommodating spaces.

6. The battery pack of any one of the preceding claims,
wherein the ring units (R) are connected to the main body (101) of the sensing substrate (100) and the branch portions (B) extending to both sides of each of the ring units (R) by three second support units (S2) formed along the periphery of the ring unit (R).

7. The battery pack of claim 6,
wherein a second support unit (S2), among the three second support units (S2), connecting the ring unit (R) and the main body (101) of the sensing substrate (100) divides the first deformation accommodating space (G1) formed between the branch portions (B) and the main body (101) of the sensing substrate (100) into two.

8. The battery pack of any one of the preceding claims,
wherein connection positions (P1, P2) connected to the battery cells (10) are formed on the branch portions (B).

9. The battery pack of claim 8,
wherein the connection positions (P1, P2) include first and second connection positions (P1, P2) located at both sides of each of the ring units (R) as the center.

10. The battery pack of claim 9,
wherein the first and second connection positions (P1, P2) are arranged in the first direction (Z1) in which the plurality of battery cells (10) are arranged.

11. The battery pack of claim 9 or 10,
wherein the first and second connection positions (P1, P2) are connected to first and second bus bars (151, 152) located adjacent to each other in the first direction (Z1), or first and second connection units (501, 502) located adjacent to each other in the first direction (Z1) for connection with the first and second bus bars (151, 152).

12. The battery pack of claim 11,
wherein the first and second connection positions (P1, P2) are connected to the first and second connection units (501, 502) connected to the first and second bus bars (151, 152); and/or
wherein each of the first and second bus bars (151, 152) connects different battery cells (10).

13. The battery pack of any one of claims 9 to 12,
wherein the ring unit (R) is connected, by the second support units (S2) formed on both sides of the ring unit (R), to the branch portion (B) where the first connection position (P1) is formed and to the branch portion (B) where the second connection position (P2) is formed.

14. The battery pack of claim 13,
wherein the first support unit (S1) at one end that closes the first deformation accommodating space (G1) is formed on the opposite side of the ring unit (R) with the first connection position (P1) as the center, and
the first support unit (S1) at the other end that closes the first deformation accommodating space (G1) is formed on the opposite side of the ring unit (R) with the second connection position (P2) as the center.

15. The battery pack of claim 14,
wherein with the ring unit (R) as the center,
the first and second connection positions (P1, P2) are formed adjacent to the ring unit (R), and
the first support unit (S1) at one end and the first support unit (S1) at the other end are formed relatively distant from the ring unit (R).
